# EUROPÄISCHE PATENTSCHRIFT

(11) **EP 2 366 984 B1**
(45) Veröffentlichungstag und Bekanntmachung des Hinweises auf die Patenterteilung: **24.10.2012**
(21) Anmeldenummer: 11156554.5
(22) Anmeldetag: 02.03.2011
(51) Int. Cl.: G01F 23/296

(54) **Vorrichtung zur Messung verschäumter Medien**
Device for measuring foamed media
Dispositif de mesure de milieux mousseux

(30) Priorität: 16.03.2010 DE 102010011490
(43) Veröffentlichungstag der Anmeldung: 21.09.2011
(73) Patentinhaber: Hella KGaA Hueck & Co., 59552 Lippstadt (DE)
(72) Erfinder: Niemann, Thomas, 27743, Delmenhorst (DE); Kück, Thomas, 28844, Weyhe-Kirchweyhe (DE); Zoyke, Ingo, 28816, Stuhr (DE); Hessenkämper, David, 28359, Bremen (DE); Tonewizki, Sergej, 49356, Diepholz (DE)
(74) Vertreter: Siekmann, Gunnar

(56) Entgegenhaltungen:
- EP-A1- 2 133 670
- DE-A1- 4 129 401
- DE-A1-102007 014 540

## Beschreibung

Die Erfindung betrifft eine Vorrichtung zur Messung eines Füllstandes in einem Behälter mit einem Ultraschallsensor, wobei dem Ultraschallsensor ein Dämpfungsbecher mit mindestens einer Vorkammer zugeordnet ist und die Vorkammer eine Einlassöffnung zum Behälter und eine Auslassöffnung zum Dämpfungsbecher aufweist.

Um den Ölstand in Motoren zu ermitteln, werden überwiegend Ultraschallsensoren eingesetzt. Diese senden Schallwellen aus, die an der Grenzfläche zwischen zwei Medien, z. B. Gas und Öl, wobei statt Öl auch andere Flüssigkeiten gemessen werden können, reflektiert und vom Ultraschallsensor wieder empfangen werden. Aus der erfassten Laufzeit der Schallwellen kann dann der Füllstand in dem Behälter, der die Vorrichtung aufweist, ermittelt werden. Bei einem im Betrieb befindlichen Motor, insbesondere in einem Kraftfahrzeug, ist der Füllstand des Öls jedoch nur schwer bis gar nicht zu ermitteln, da das Öl stark verschäumt ist und die Schallwellen an den Gasbläschen im Öl reflektiert werden. Die detektierten Werte streuen daher sehr stark.

Für auswertbare Messungen ist allerdings eine eindeutige Grenzfläche zwischen den Medien Gas und Öl nötig. Um dem Problem der stark streuenden Werte entgegenzuwirken, sind den Ultraschallsensoren Dämpfungseinrichtungen, z. B. sogenannte Dämpfungsbecher, zugeordnet. Innerhalb dieser Dämpfungsbecher, welche die Messstrecke des Ultraschallsensors umhüllen, ist die zu messende Flüssigkeit beruhigt und nur durch eine kleine Öffnung des Dämpfungsbechers zum Behälter mit diesem verbunden. Durch die kleine Öffnung des Dämpfungsbechers zum Behälter gelangen weniger Gasblasen in den Dämpfungsbecher. Der Füllstand im Dämpfungsbecher entspricht dabei dem Flüssigkeitsstand außerhalb des Dämpfungsbechers.

Weiterentwicklungen eines solchen Dämpfungsbechers zeigen die Druckschriften DE 10 2008 027 969 A1 und WO 2008/009277 A1. In beiden Druckschriften ist dem Dämpfungsbecher ein Vorvolumen zugeordnet. Diese Vor-volumen dienen dazu, die zu messende Flüssigkeit, z. B. verschäumtes Öl, zu entgasen, so dass in der Messstrecke des Dämpfungsbechers eine Flüssigkeit einströmt, die relativ blasenfrei ist. Dabei sind die Vorvolumen so ausgebildet, dass die Flüssigkeit in einer Ebene durch in den Kammern angeordnete Strukturen zur Eintrittsöffnung des Dämpfungsbechers geführt wird.

Jedoch zeigen Tests, dass das verschäumte Öl in einem Motor bei plötzlichen Drehzahlsprüngen z. B. von 3000 auf 4000 oder 5000 Umdrehungen / Minute die bekannten Vorvolumen und Kammern sehr schnell durchströmt, ohne dass die Möglichkeit besteht, dass das verschäumte Öl in dem Vorvolumen entgasen kann. Es kommt somit dazu, dass Gasbläschen in die Messstrecke des Dämpfungsbechers eingetragen werden und die korrekte Anzeige des Füllstandes behindern. Da diese Gasbläschen nur langsam aus der Messstrecke des Dämpfungsbechers entweichen können, detektieren die bekannten Sensoren auch lange Zeit nach den Drehzahlsprüngen nicht den tatsächlichen Füllstand im Behälter, obwohl außerhalb des Dämpfungsbechers ein messbarer Füllstand vorliegt.

Die Zeit, in der der Füllstand nicht korrekt erfasst wird, wird als Totzeit bezeichnet und führt eventuell zur Fehlermeldung eines zu niedrigen Füllstandes im Behälter. Dieses Problem tritt besonders bei einer dynamischen Fahrweise über einen längeren Zeitraum auf, da hier aufgrund der langen Totzeiten, in denen nicht der tatsächliche Füllstand ermittelt wird, keine Mittelwertberechnung mehr möglich ist, was in der Folge durch "falsches Handeln" aufgrund der unwahren Fehler-meldung zu größeren Schäden führen kann.

Der Erfindung liegt die Aufgabe zu Grunde, eine Vorrichtung der eingangs genannten Art zu schaffen, bei der die Vorkammer derart ausgebildet ist, dass der Füllstand in einem Behälter auch bei dynamischer Fahrweise mit plötzlichen Drehzahlsprüngen und stark verschäumten Öl zuverlässig bestimmt werden kann.

Die Lösung dieser Aufgabe erfolgt mit einer Vorrichtung mit den Merkmalen des Patentanspruchs 1. Vorteilhafte Weiterbildungen der Erfindung sind in den Unteransprüchen beschrieben.

Eine Vorrichtung zur Messung eines Füllstandes in einem Behälter mit einem Ultraschallsensor, wobei dem Ultraschallsensor ein Dämpfungsbecher mit mindestens einer Vorkammer zugeordnet ist und die Vorkammer eine Einlassöffnung zum Behälter und eine Auslassöffnung zum Dämpfungsbecher aufweist, zeichnet sich erfindungsgemäß dadurch aus, dass die Vorkammer mindestens zwei horizontal übereinander liegende Ebenen aufweist, wobei jede Ebene eine geometrische Struktur aufweist, und dass die geometrischen Strukturen der Ebenen so gestaltet sind, dass die Ebenen von der Flüssigkeit gegenläufig zueinander durchströmt werden.

Eine mit zwei Ebenen gestaltete Vorkammer der Füllstandsmessvorrichtung gewährleistet, dass auch stark verschäumte und mit hohen Geschwindigkeiten in die Vorkammer eintretende Flüssigkeiten, wie z. B. Öl im Motor eines Kraftfahrzeugs, in der Vorkammer verlangsamt werden und in der Vorkammer entgasen. Dies wird einerseits durch die gegenüber einer Vorkammer mit nur einer Ebene längere Strecke in der Vorkammer erreicht und andererseits dadurch, dass die beiden Ebenen gegenläufig zueinander durchströmt werden. Dabei wird die Flüssigkeit, vor allem beim Übergang von der einen zur anderen Ebene, stark verwirbelt, was die Strömungsgeschwindigkeit der Flüssigkeit besonders stark verringert. In der Flüssigkeit eingeschlossene Gasbläschen können so effektiv in der Vorkammer zurückgehalten werden und aus der verschäumten Flüssigkeit entweichen.

Mit Vorteil sind die Ebenen derart miteinander gekoppelt, dass die Ebenen von der Flüssigkeit von oben nach unten durchströmt werden. Dabei wird ausgenutzt, dass die Dichte der verschäumten Flüssigkeit geringer ist als die Dichte der Flüssigkeit ohne Gasblasen und dass das in der Flüssigkeit enthaltene Gas nach oben strebt. In der Vorkammer kann das beim Entgasen aus der Flüssigkeit austretende und nach oben strömende Gas so auf einfache Weise entweichen und aus der Vorkammer abgeführt werden. Die Einlassöffnung in die Vorkammer ist daher der oberen der beiden Ebenen zugeordnet. Der unteren Ebene sind bevorzugt nur eine Verbindungsöffnung zur oberen Ebene und eine Auslassöffnung zur Eintrittsöffnung der Messstrecke zugeordnet. Würden die Ebenen der Vorkammer von unten nach oben durchströmt, könnte sich das Gas an einem oberen Punkt innerhalb der Vorkammer sammeln und nicht abgeführt werden und in die Messstrecke des Dämpfungsbechers gelangen.

Die geometrische Struktur der Ebenen der Vorkammer ist entscheidend dafür wie die einzelnen Ebenen durchströmt werden und ob ein effektives Entgasen des einströmenden Mediums möglich ist. Um eine möglichst einfache Gestaltung zu erreichen ist vorgesehen, dass die geometrische Struktur in mindestens einer der Ebenen der Vorkammer durch Umlenkelemente vorgegeben ist. Diese Umlenkelemente können auf vielfältige Weise gestaltet sein. Auf einfache Weise sind die Umlenkelemente mit einer Seite an der Wandung der Vorkammerebenen angelenkt. Die der Wandung abgewandte Seite bildet ein freies Ende in der Vorkammer und zeichnet sich vorteilhafterweise dadurch aus, dass mindestens ein Umlenkelement zum freien Ende hin rundlich verdickt ist, wodurch die Strömungseigenschaften innerhalb der Vorkammer wiederum verbessert sind.

Nach einer Weiterbildung bilden die in den Ebenen angeordneten Umlenkelemente eine geometrische Struktur die sich dadurch auszeichnet, dass die geometrische Struktur in mindestens einer Ebene als Mäander ausgebildet ist. Dieser Mäander ist durch alternierend an den gegenüberliegenden Wandungen, der um die Messstrecke des Dämpfungsbechers geführten Vorkammer, angeordnete Umlenkelemente gebildet. Der dadurch in der Vorkammer gebildete Kanal weist somit entsprechend der Anzahl der Umlenkelemente Windungen auf, wobei mit jeder Windung eine Verringerung der Strömungsgeschwindigkeit erreicht ist. Damit ist der in der Vorkammer zur Verfügung stehende Raum optimal genutzt und die Länge der Strecke des Kanals zwischen der Einlassöffnung in die Vorkammer und der Auslassöffnung zur Eintrittsöffnung der Messstrecke möglichst lang gestaltet.

Bei einer Ausführungsform eines Mäanders ist vorgesehen, dass mindestens eine der Ebenen mehr als einen Mäander aufweist, und dass die Mäander in der Ebene voneinander getrennt sind. Die Trennung der Mäander ist dabei so zu verstehen, dass die einströmende Flüssigkeit im Bereich der Einlassöffnung der jeweiligen Ebene auf mindestens zwei Kanäle aufgeteilt wird, die erst an der Auslassöffnung der jeweiligen Ebene wieder zusammengeführt werden, wobei jeder der Kanäle als ein Mäander ausgebildet ist. Durch die Aufteilung der einströmenden Flüssigkeit in Teilströme ist erreicht, dass diese innerhalb einer kürzeren Strecke verlangsamt werden. Beim Zusammenführen der Teilströme erfolgt zudem eine weitere Verwirbelung der Flüssigkeit, die ein noch besseres Entgasen ermöglicht.

In einer anderen Ausführungsform ist die geometrische Struktur bevorzugt aus einzelnen Barrieren gebildet, die versetzt zueinander in mindestens einer der Ebenen angeordnet sind. Mit dieser Anordnung verteilt sich die einströmende Flüssigkeit über die gesamte Fläche der Ebene, und wird mehrfach umgelenkt, aufgeteilt und zusammengeführt. Somit ist eine ständige Verwirbelung der Flüssigkeit gegeben. Als Barrieren eignen sich unter anderem V-förmige Umlenkelemente.

Ebenso eine ständige Verwirbelung erzeugt eine Ausführungsform mit einer geometrischen Struktur, die in mindestens einer der Ebenen Dome aufweist. Abhängig von der Anzahl und Form der Dome wird die einströmende Flüssigkeit umgelenkt und verwirbelt, wobei eine größere Anzahl Dome die Strömung der Flüssigkeit stärker beeinflusst als wenige Dome.

Eine weitere Ausführung sieht vor, dass die geometrische Struktur in mindestens einer Ebene als Spirale ausgebildet ist. Hier ist, wie bei den Mäanderstrukturen, eine möglichst lange Strecke zwischen Einlass- und Auslassöffnung der Vorkammer geschaffen, die zwar keine oder nur kleine in den Strömungskanal hineinragende Umlenkelemente aufweist, dafür aber ebenso eine lange Strecke des Kanals ermöglicht.

Sowohl bei der Ausführung als Mäander wie auch bei den anderen Ausführungen kann zudem vorgesehen sein, dass der Vorkammer eine zweite Auslassöffnung zugeordnet ist, die in Strömungsrichtung direkt hinter der Einlassöffnung der Vorkammer zum Behälter und vor den Windungen der Vorkammer angeordnet ist. Über die zweite Auslassöffnung kann plötzlich in die Vorkammer einströmende Flüssigkeit abgeführt werden. Dabei ist entscheidend, dass die schon in der Vorkammer befindliche Flüssigkeit träger ist als die hineinströmende Flüssigkeit. Damit gelangt von der stark verschäumten Flüssigkeit, z. B. Öl in einem Motor, insgesamt weniger in die Vorkammer, wodurch als positiver Effekt in der Vorkammer weniger Gasblasen aus der Flüssigkeit entweichen müssen, damit die zur Messstrecke strömende Flüssigkeit blasenfrei ist. Um diesen Vorteil voll auszuschöpfen ist die zweite Auslassöffnung direkt hinter der Einlassöffnung in der oberen Ebene anzuordnen, so dass schon vor der eigentlichen Vorkammer ein Großteil der besonders schnell einströmenden und stark verschäumten Flüssigkeit abgeleitet ist.

Damit über diese zweite Auslassöffnung in der Vorkammer nicht auch stark verschäumte Flüssigkeit in die Vorkammer eindringt, ist vorgesehen, dass die zweite Auslassöffnung in einer Ableitungseinrichtung, insbesondere einem Ableitungsrohr, mündet, welche parallel zu der Messstrecke im Dämpfungsbecher angeordnet ist und eine Entlüftungsöffnung aufweist. Durch die parallele Anordnung zum Dämpfungsbecher ist, insbesondere wenn die Ableitungseinrichtung an der Messstrecke des Dämpfungsbechers anliegt, eine kompakte Bauweise erreicht. Da die Messstrecke im Dämpfungsbecher des Ultraschallsensors für eine korrekte Messung des Füllstands senkrecht zur Horizontalen ausgerichtet sein muss, ist auch die parallel dazu angeordnete Ableitungsvorrichtung senkrecht zur Horizontalen ausgerichtet und weist vorteilhafterweise eine Höhe auf, die in etwa der Höhe der Messstrecke entspricht.

Bei bestimmten Drehzahlen bzw. in bestimmten Drehzahlbereichen wird der Dämpfungsbecher angeregt und gerät in Schwingung. Dabei kann im Inneren des Dämpfungsbechers ein Sog entstehen, welcher das Einströmen der Flüssigkeit in die Vorrichtung verstärkt. Durch die Anordnung der Ableitungseinrichtung parallel zur Messstrecke des Dämpfungsbechers und die gleiche Höhe mit der Messstrecke ist erreicht, dass der Sog sowohl in der Messstrecke als auch der Ableitungseinrichtung des Dämpfungsbechers entsteht. Anstatt wie bei bekannten Dämpfungsbechern durch die Vorkammer in die Messstrecke zu gelangen, ist die hineinströmende Flüssigkeit auch bei auftretendem Sog über die Ableitungs-vorrichtung abführbar. Dies ist zudem durch die Anordnung der zweiten Auslassöffnung mit der Ableitungseinrichtung nahe der Einlassöffnung in die Vorkammer und der Trägheit des in der Vorkammer befindlichen Mediums begünstigt. Diese Ableitungseinrichtung kann auch ein Bypass, Kamin oder Kanal sein, vorausgesetzt es ist sichergestellt, dass keine Flüssigkeit von oben in die Ableitungseinrichtung gelangen kann.

Um sowohl die Ableitungseinrichtung als auch die Messstrecke vor dem ungewollten Eindringen von Flüssigkeit und Ölschaum zu schützen, ist vorgesehen, ein Abschirmelement, welches bevorzugt als Kappe ausgebildet ist, im oberen Endbereich der Ableitungseinrichtung und der Messstrecke anzuordnen. Dieses Abschirmelement kann in mehreren Teilen, mit je Entlüftungsöffnung des Dämpfungsbechers einem einzelnen Abschirmelement, oder aufgrund der ähnlichen Höhe beider Entlüftungsöffnungen, von Messstrecke und Ableitungseinrichtung, als ein gemeinsames Teil ausgebildet sein.

Weiterhin betrifft die Erfindung einen Motor, insbesondere einen Kraftfahrzeugmotor oder ein Kraftfahrzeug, die sich jeweils dadurch auszeichnen, dass sie eine Vorrichtung wie oben beschrieben aufweisen.

Nachfolgend wird die Erfindung anhand eines in der Zeichnung dargestellten bevorzugten Ausführungsbeispiels weiter erläutert. Im Einzelnen zeigen die Figuren in:
- Fig. 1:: schematische Darstellung der Fließrichtung in der Vorrichtung mit einer in zwei Ebenen unterteilten Vorkammer;
- Fig. 2:: schematische Darstellung der Fließrichtung in der oberen Ebene der Vorrichtung in Fig. 1 in Draufsicht;
- Fig. 3:: schematische Darstellung der Fließrichtung in der unteren Ebene der Vorrichtung in Fig. 1 in Draufsicht;
- Fig. 4:: Explorationszeichnung einer erfindungsgemäßen Vorrichtung, bei der die Vorkammer in zwei Ebenen unterteilt ist, in einer perspektivischen Ansicht;
- Fig. 5:: Schnittdarstellung einer erfindungsgemäßen Vorrichtung in der Ebene der Vorkammer in Draufsicht;
- Fig. 6:: Darstellung der Ebenen einer Ausführungsform einer Vorkammer mit zwei Ebenen und in den Ebenen angeordneten Umlenkelementen in Draufsicht;
- Fig. 7:: Darstellung der Ebenen einer zweiten Ausführungsform einer Vorkammer mit zwei Ebenen und in den Ebenen angeordneten Umlenkelementen in Draufsicht;
- Fig. 8:: Darstellung der Ebenen einer dritten Ausführungsform einer Vorkammer mit zwei Ebenen und in den Ebenen angeordneten Umlenkelementen in Draufsicht;
- Fig. 9:: Darstellung der Ebenen einer vierten Ausführungsform einer Vorkammer mit zwei Ebenen und in den Ebenen angeordneten Spiralstrukturen in Draufsicht;
- Fig. 10:: Darstellung der Ebenen einer fünften Ausführungsform einer Vorkammer mit zwei Ebenen und einer Vielzahl in den Ebenen angeordneter Dome in Draufsicht, und
- Fig. 11:: eine weitere Ausführungsform der Vorrichtung mit einer Ableitungseinrichtung in geschnittener Darstellung.

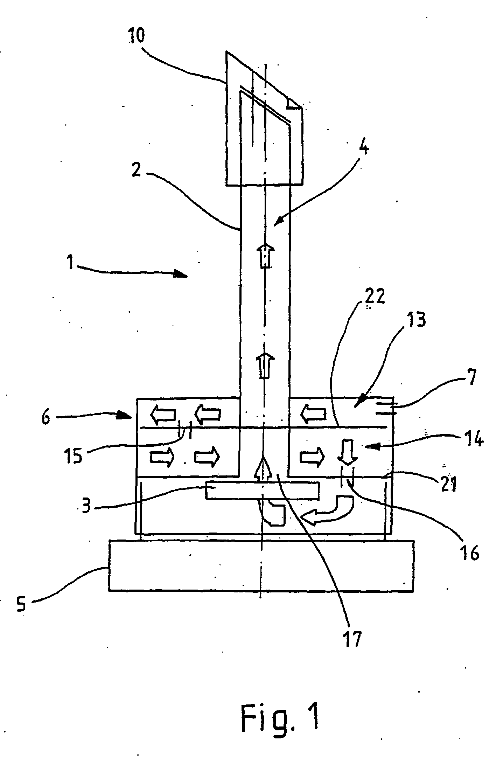

Eine erfindungsgemäße Vorkammer 6 einer Vorrichtung 1 zur Bestimmung des Füllstandes in einem Behälter weist eine obere und eine untere Ebene 13, 14 auf, wobei beide Ebenen 13, 14 gegenläufig zueinander durchströmt werden. Fig. 1 bis Fig. 3 zeigen die Fließrichtung einer einströmenden Flüssigkeit in der Vorrichtung 1. Die Vorrichtung 1 weist in Fig. 1 im Bodenbereich einen Ultraschallsensor 3 auf. Dieser Ultraschallsensor 3 ist auf einem Sockelelement 5 der Vorrichtung 1 angeordnet. Mittig über dem Ultraschallsensor 3 ist ein Dämpfungsbecher 2 angeordnet, wobei der Dämpfungsbecher 2 im Inneren eine Messstrecke 4 aufweist. Diese Messstrecke 4 ist bei gefülltem Behälter abhängig von dem Füllstand des Behälters mit Flüssigkeit, insbesondere Öl in einer Ölwanne eines Kraftfahrzeuges, belegt.

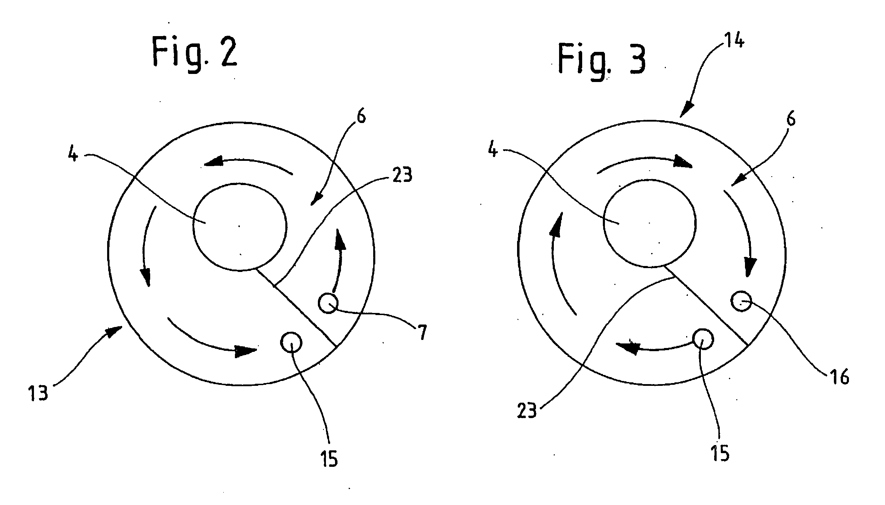

Der Ultraschallsensor 3 und die Messstrecke 4 sind in einer Linie übereinander angeordnet, wobei der Ultraschallsensor 3 die erzeugten Schallwellen in die Messstrecke 4 des Dämpfungsbechers 2 sendet. Um korrekte Messwerte zu erhalten, sind der Ultraschallsensor 3 und die Messstrecke 4 senkrecht zur Horizontalen angeordnet. An das Sockelelement 5 angesetzt ist die Vorkammer 6. Diese ist in eine obere Ebene 13 und eine untere Ebene 14 unterteilt. Die obere Ebene 13 weist eine Einlassöffnung 7 und die untere Ebene 14 eine Auslassöffnung 16 auf, wobei beide Ebenen über die, in einem Trennelement 22 angeordnete, Verbindungsöffnung 15 miteinander verbunden sind. Es wird zuerst die obere Ebene 13 und dann die untere Ebene 14 durchströmt. Die Fließrichtung in der oberen Ebene 13 und der unteren Ebene 14 ist in Fig. 2 und Fig. 3 dargestellt.

Im oberen Endbereich der Messstrecke 4 des Dämpfungsbechers 2 weist die Vorrichtung 1 ein Abschirmelement 10 auf. Dieses Abschirmelement 10 ist als eine Kappe ausgebildet, die die Entlüftungsöffnung der Messstrecke 4 abdeckt, wobei in dem Abschirmelement 10 selbst eine äußere Entlüftungseinrichtung vorgesehen ist, welche ein Entgasen der Messstrecke 4 ermöglicht. Mit dem Abschirmelement 10 ist das Eindringen von Ölschaum oder anderen verschäumten Flüssigkeiten in die Messstrecke 4 erschwert.

Die Fig. 2 zeigt die mit Pfeilen dargestellte Fließrichtung in der oberen Ebene 13. Nachdem die Flüssigkeit über die Einlassöffnung 7 in die Vorkammer 6 geströmt ist, wird die Flüssigkeit durch die in der oberen Ebene 13 vorgegebene geometrische Struktur einmal entgegen der Uhrzeigerrichtung um die Messstrecke 4 des Dämpfungsbechers 2 herumgeführt. Über die Verbindungsöffnung 15 gelangt die Flüssigkeit dann in die in Fig. 3 dargestellte untere Ebene 14. In der unteren Ebene 14 strömt die Flüssigkeit durch die vorgegebene geometrische Struktur in Uhrzeigerrichtung wiederum einmal um die Messstrecke 4 des Dämpfungsbechers 2 zur Auslassöffnung 16. Entscheidend ist dabei, dass die Fließrichtung in der in Fig. 3 gezeigten unteren Ebene 14 gegenläufig zu der in Fig. 2 gezeigten oberen Ebene 13 ist. Die geometrische Struktur in den Ebenen 13, 14 ist jeweils durch ein Sperrelement 23 vorgegeben. Dieses Sperrelement 23 ist zwischen den Öffnungen in der jeweiligen Ebene angeordnet und gewährleistet, dass die hineinströmende Flüssigkeit einmal um die Messstrecke 4 herumgeführt ist. Von der Austrittsöffnung 16 strömt die Flüssigkeit dann, wie in Fig. 1 zu sehen, in die Messstrecke 4.

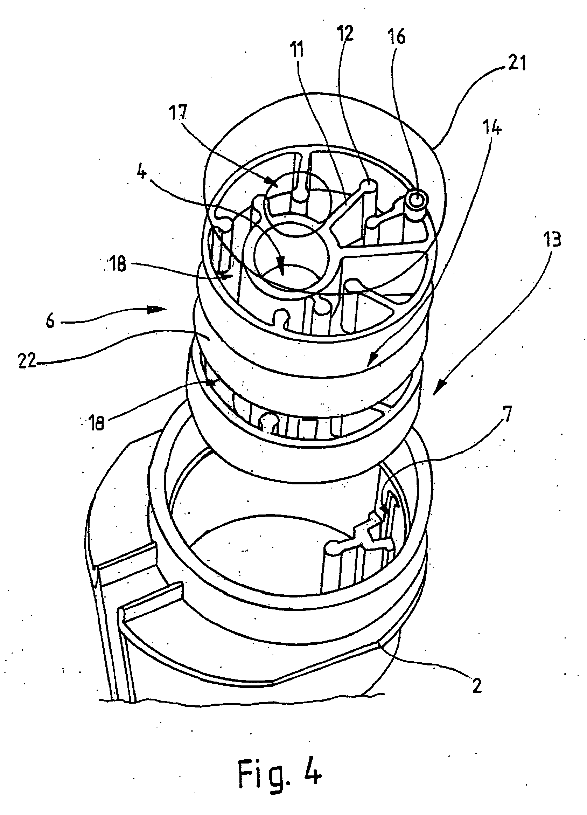

Ein Ausführungsbeispiel einer erfindungsgemäßen Vorrichtung ist in Fig. 4 dargestellt. Dabei ist die Vorrichtung 1 in der Zeichnung mit dem Bodenbereich nach oben dargestellt, so dass die untere Ebene 14 der beiden Ebenen oberhalb der oberen Ebene 13 dargestellt ist. Ein Bodenelement 21 verschließt die Vorkammer nach unten und weist die Auslassöffnung 16 zu der Vorkammer und eine Eintrittsöffnung 17 in die Messstrecke 4 auf. An dieses Bodenelement 21 ist die untere Ebene 14 angesetzt, welche über die Verbindungsöffnung 15 in dem Trennelement 22 mit der oberen Ebene 13 verbunden ist. Das Bodenelement 21 und das Trennelement 22 der Vorkammer 6 sind dabei jeweils als eine Platte unter bzw. zwischen den Ebenen 13, 14 der Vorkammer 6 ausgebildet.

Im angedeuteten Dämpfungsbecher 2 ist der äußere Teil der Einlassöffnung 7 der Vorkammer 6 zum Behälter dargestellt, welcher mit einer passenden Öffnung in der oberen Ebene 13 der Vorkammer 6 zusammenwirkt. Beide Ebenen 13, 14 weisen eine geometrische Struktur auf, die in jeder Ebene einmal um die Mess-strecke 4 der Vorrichtung 1 geführt ist und durch in einen Kanal 18 hineinragende Umlenkelemente 11 als Mäander ausgebildet sind.

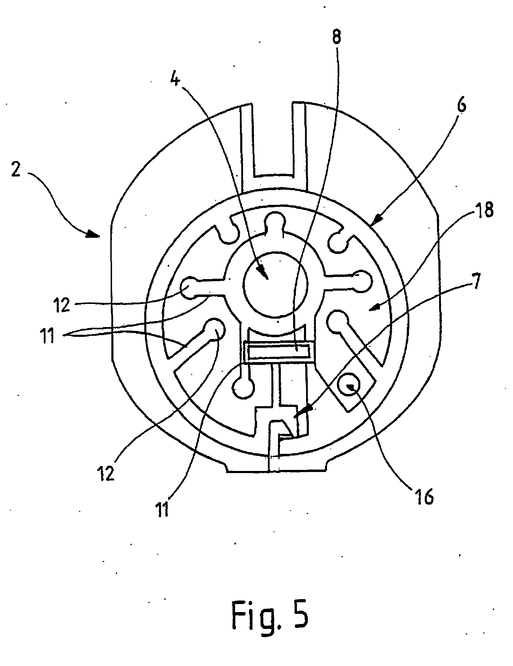

Die geometrische Struktur der oberen Ebene 13 und die dadurch bedingte Führung der einströmenden Flüssigkeit in der Vorkammer 6 ist zur Verdeutlichung der Mäanderstruktur noch einmal in Fig. 5 dargestellt. In der Mitte der Vorkammer 6 ist die Messstrecke 4 angeordnet, welche von der Vorkammer 6 umgeben ist. Durch diese Ausgestaltung der Vorkammer 6 ist ein Kanal 18 gebildet, der einmal um die Messstrecke 4 herumgeführt ist. Dieser Kanal 18 verbindet die Einlassöffnung 7 zum Behälter mit der Auslassöffnung 16 zur Eintrittsöffnung 17 der Messstrecke 4 des Dämpfungsbechers 2. Dabei bilden eine Vielzahl von Umlenkelementen 11 in dem Kanal 18 der Vorkammer 6 Hindernisse.

Die eingebauten Umlenkelemente 11 führen zu Windungen, um die die hineinströmende Flüssigkeit herumgelenkt und verlangsamt wird. Diese Umlenkelemente sind alternierend mit den sich gegenüberliegenden Wänden des Kanals 18 verbunden. Damit ist die Strömung der Flüssigkeit in diesem Ausführungsbeispiel mit einem Mäander vergleichbar. Die Anzahl der Windungen entspricht dabei der Anzahl der in der Vorkammer 6 verbauten Umlenkelemente 11. Die freien Enden der Umlenkelemente 11 sind zudem mit rundlichen Verdickungen 12 versehen. Die von der Flüssigkeit zu durchströmende Strecke in der Vorkammer 6 ist aufgrund der Gestaltung des Kanals 18 möglichst lang. Der Aufbau der geometrischen Struktur der unteren Ebene 14 ist gleich der geometrischen Struktur der oberen Ebene 13, nur dass im Bereich der Einlassöffnung 7 am Ende des Kanals 18 statt der Einlassöffnung 7 die Auslassöffnung 16 angeordnet ist.

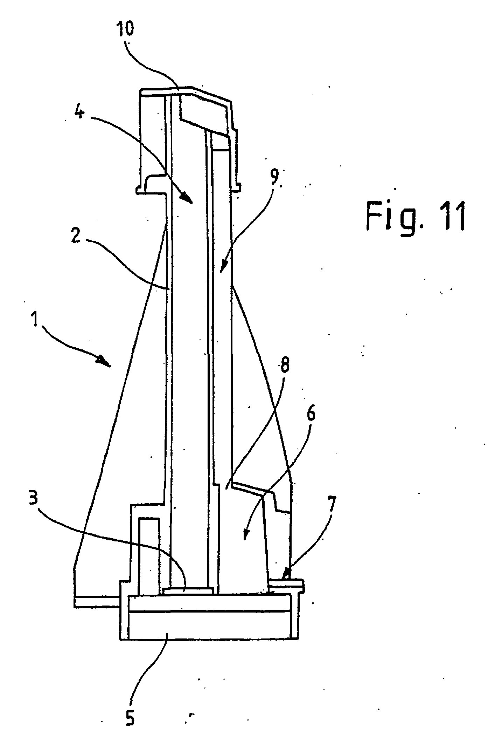

Fig. 5 weist zudem noch eine Auslassöffnung 8 auf, welche in eine Ableitungseinrichtung 9 übergeht. Die entsprechende Ableitungseinrichtung 9 ist in Fig. 11 dargestellt. Die Auslassöffnung 8 ist in jedem Fall nahe der Einlassöffnung 7 vorzusehen.

Ist ein Behälter mit einer Vorrichtung 1 ausgestattet und nimmt die zu messende Flüssigkeit auf, insbesondere Öl in einem Motor eines Kraftfahrzeuges, füllen sich Vorkammer 6 und Messstrecke 4 der Vorrichtung 1 mit der Flüssigkeit. Bei Betrieb des Kraftfahrzeugmotors mit einer erfindungsgemäßen Vorrichtung 1 im Motorraum wird die Flüssigkeit durch die ständige Umwälzung verschäumt. Die verschäumte Flüssigkeit strömt zuerst über die obere Ebene 13 zur Verbindungs-öffnung 15, über welche die Flüssigkeit in die untere Ebene 14 gelangt.

Durch die von Umlenkelementen 11 gebildete geometrische Struktur des Kanals 18 wird die Strömungsgeschwindigkeit verringert und Gasblasen können aus der verschäumten Flüssigkeit entweichen, bevor die Vorkammer 6 durchströmt ist. Beim Übergang von der oberen Ebene 13 zur unteren Ebene 14 wird die Flüssigkeit durch die gegenläufige Strömung in den Ebenen 13 und 14 zusätzlich verwirbelt, wodurch die Auflösung von Gasblasen und Schaum verbessert ist, so dass auch bei großen und schnell einströmenden Mengen eine vollständig blasenfreie Flüssigkeit in der Messstrecke 4 gewährleistet werden kann. Von der unteren Ebene 14 gelangt die Flüssigkeit dann über die Auslassöffnung 16 zur Eintrittsöffnung 17 und in die Messstrecke 4 des Dämpfungsbechers 2, wo die Messung des Füllstandes mit den von dem Ultraschallsensor 3 ausgesendeten Schallwellen erfolgt. Über eine Entlüftungseinrichtung im oberen Endbereich der Messstrecke 4 und im Abschirmelement 10 kann das in der Messstrecke 4 befindliche Gas bei steigendem Füllstand entweichen und bei fallendem Füllstand wiederum in die Messstrecke 4 eindringen. Der in der Messstrecke 4 vorliegende Füllstand entspricht dabei dem Füllstand im Behälter.

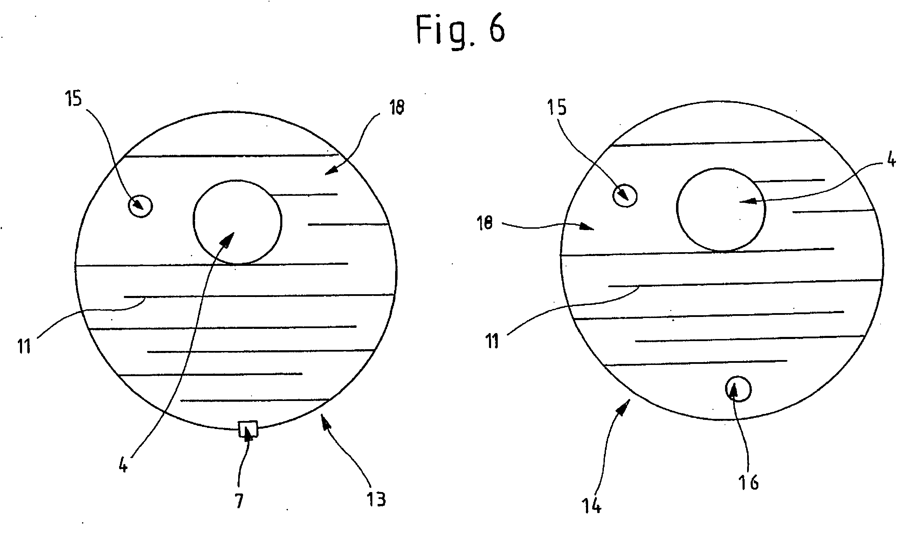

In den Figuren 6 bis 10 sind weitere Ausführungsformen einer Vorkammer 6 mit zwei Ebenen 13, 14 dargestellt. Dabei zeigen die Figuren 6 bis 10 jeweils die obere Ebene 13 und die untere Ebene 14 nebeneinander in Draufsicht. Weiterhin sind die Einlassöffnung 7 in der oberen Ebene 13, die Verbindungsöffnung 15 zwischen der oberen Ebene 13 und der unteren Ebene 14, die Auslassöffnung 16 in der unteren Ebene 14 sowie die Messstrecke 4 in jeder der Figuren 6 bis 10 ersichtlich. Die Unterschiede zwischen den Figuren 6 bis 10 ergeben sich aus der Gestaltung der Strukturen in den Vorkammerebenen.

Fig. 6 zeigt parallel zueinander ausgerichtete Umlenkelemente 11 die von der Vorkammerwand in das Innere der Vorkammer 6 hineinragen und einen Kanal 18 formen, der als Mäander in der jeweiligen Ebene ausgebildet ist, wobei beide Ebenen 13, 14 wie in Fig. 2 und Fig. 3 gegenläufig zu einander durchströmt werden.

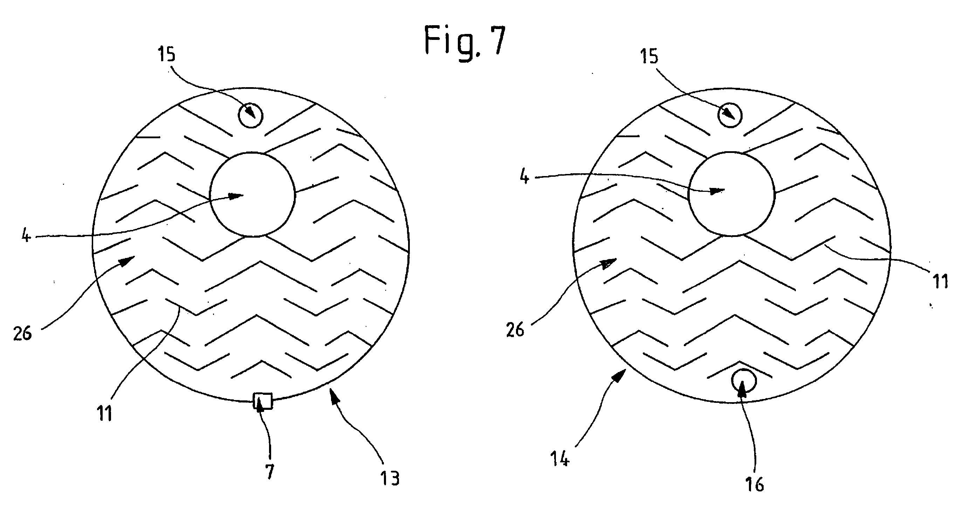

Bei der Vorkammerstruktur in Fig. 7 sind die Umlenkelemente 11 als Barrieren geformt, die die einströmende Flüssigkeit über die gesamte Fläche 26 der oberen Ebene 13 und der unteren Ebene 14 verteilen. Die einzelnen Umlenkelemente 11 sind in dieser Ausführungsform jeweils V-förmig ausgebildet und in den Ebenen 13, 14 derart angeordnet, dass die Öffnungen zwischen den einzelnen Umlenkelementen 11 versetzt zueinander ausgerichtet sind.

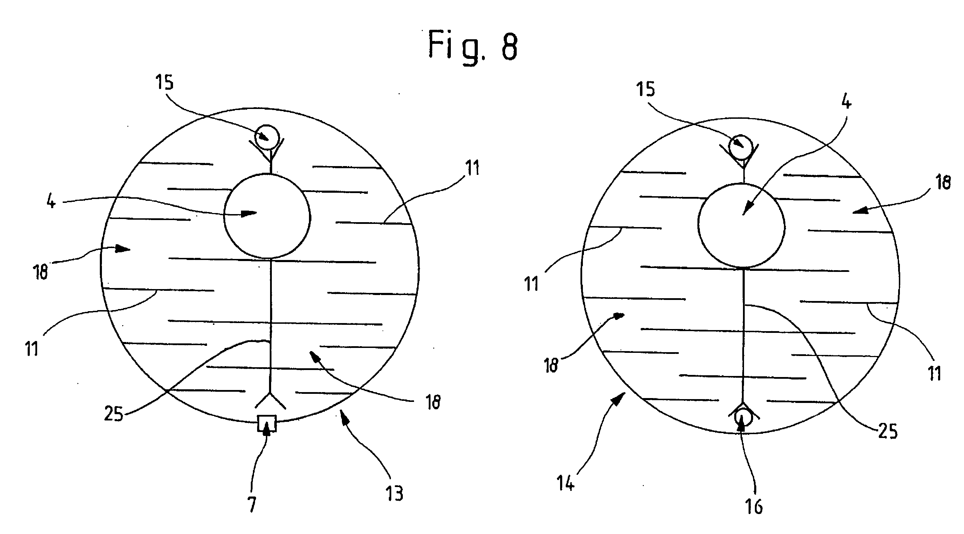

Wiederum parallele Umlenkelemente 11, ähnlich denen in Fig. 6, sind in den Ebenen 13, 14 der Ausführungsform in Fig. 8 angeordnet, wobei hier in jeder der beiden Ebenen 13, 14 zwei getrennte Kanäle 18 gebildet sind, die an den Öffnungen in der jeweiligen Ebene 13, 14 jeweils aufgeteilt bzw. zusammengeführt werden. Diese Öffnungen sind in der oberen Ebene 13 die Einlassöffnung 7 und die Verbindungsöffnung 15 sowie in der unteren Ebene 14 die Verbindungsöffnung 15 und die Auslassöffnung 16. Um die Kanäle 18 in der jeweiligen Ebene zu trennen, ist zusätzlich zu den Umlenkelementen 11 ein weiteres Element 25 vorgesehen, von dem wiederum Umlenkelemente 11, abgehen. Durch die zusätzlichen Umlenkelemente 11, die vom Element 25 abgehen, ist in den Kanälen 18 jeweils eine Mäanderstruktur geschaffen.

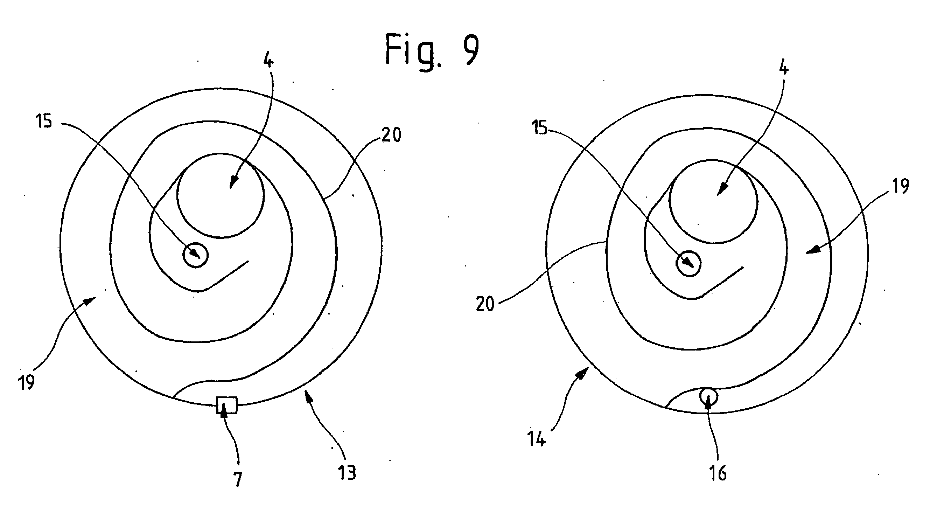

Eine Spiralstruktur in den Vorkammerebenen zeigt Fig. 9. Anstatt viele Umlenkelemente 11 in der Vorkammer 6 anzuordnen und eine Mäanderstruktur mit vielen Windungen zu erzeugen, ist hier mit dem durchgehenden Leitelement 20 ein Kanal 19 ausgebildet in dem einströmende Flüssigkeit spiralförmig um die Messstrecke 4 des Dämpfungsbechers 2 herumführbar ist. Dabei durchströmt die Flüssigkeit die Vorkammer 6 in der oberen Ebene 13 von außen nach innen und in der unteren Ebene 14 gegenläufig zur oberen Ebene 13 von innen nach außen.

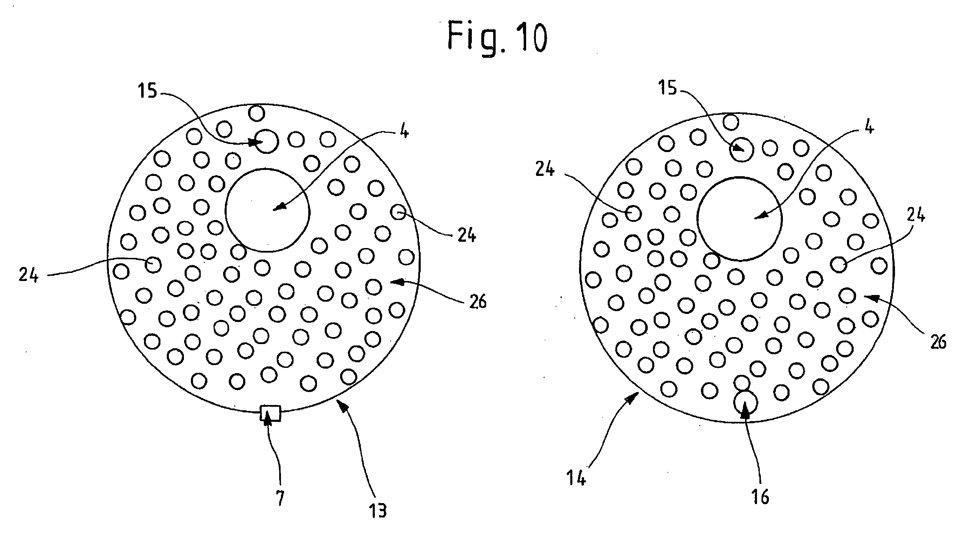

Kein Leitelement 20 oder Umlenkelement 11 ist in der Ausführungsform in Fig. 10 vorgesehen. Die Verlangsamung und die Verteilung einströmender Flüssigkeit über die freie Fläche 26 wird durch eine Vielzahl von in den Ebenen 13, 14 angeordneten Domen 24 beeinflusst, um die die einströmende Flüssigkeit herumfließen muss.

In dem Ausführungsbeispiel in Fig. 11 ist wie in Fig. 1 das Sockelelement 5 an die Vorkammer 6 angesetzt, wobei der Vorkammer 6 eine zweite Auslassöffnung 8 zugeordnet ist. Diese zweite Auslassöffnung 8 ist am höchsten Punkt der Vorkammer 6 angeordnet und führt in eine Ableitungseinrichtung 9, welche parallel zur Messstrecke 4 des Dämpfungsbechers 2 ausgerichtet ist, außen an dem Dämpfungsbecher 2 anliegend angeordnet ist und in etwa die Höhe der Messstrecke 4 aufweist. Im oberen Endbereich der Ableitungseinrichtung 9 und der Messstrecke 4 des Dämpfungsbechers 2 weist die Vorrichtung 1 wiederum ein Abschirmelement 10 auf, welches die Entlüftungsöffnungen der Messstrecke 4 und der Ableitungseinrichtung 9 überspannt.

Mit der Ableitungseinrichtung 9 wird die bei plötzlichen Füllstands-änderungen, insbesondere bei dynamischer Fahrweise und Drehzahlsprüngen, in die Vorkammer 6 einströmende Flüssigkeit über die Auslassöffnung 8 in die Ableitungseinrichtung 9 gefördert. Durch den der einströmenden Flüssigkeit entgegengesetzten, größeren Widerstand und die höhere Trägheit der Flüssigkeit in der Vorkammer 6 ist gewährleistet, dass die einströmende Flüssigkeit nicht in die Messstrecke 4 gelangt. Bei niedrigen Drehzahlen und moderaten Drehzahl-steigerungen strömt die Flüssigkeit dagegen weiterhin über den in der Vorkammer 6 ausgebildeten Kanal 18 zur Auslassöffnung 16 und Eintrittsöffnung 17 der Messstrecke 4 des Dämpfungsbechers 2.

## Patentansprüche

1. Vorrichtung zur Messung eines Füllstandes in einem Behälter mit einem Ultraschallsensor, wobei dem Ultraschallsensor ein Dämpfungsbecher mit mindestens einer Vorkammer zugeordnet ist und die Vorkammer eine Einlassöffnung zum Behälter und eine Auslassöffnung zum Dämpfungsbecher aufweist,
**dadurch gekennzeichnet,**
**dass** die Vorkammer (6) mindestens zwei horizontal übereinander liegende Ebenen (13, 14) aufweist, wobei jede Ebene (13, 14) eine geometrische Struktur aufweist, und
**dass** die geometrischen Strukturen der Ebenen (13, 14) so gestaltet sind, dass die Ebenen (13, 14) von der Flüssigkeit gegenläufig zueinander durchströmt werden.

2. Vorrichtung nach Anspruch 1, **dadurch gekennzeichnet, dass** die Ebenen (13, 14) von der Flüssigkeit von oben nach unten durchströmt werden.

3. Vorrichtung nach einem der Ansprüche 1 oder 2, **dadurch gekennzeichnet, dass** die geometrische Struktur in mindestens einer der Ebenen (13, 14) der Vorkammer (6) durch Umlenkelemente (11) vorgeben ist.

4. Vorrichtung nach einem der vorhergehenden Ansprüche, **dadurch gekennzeichnet, dass** mindestens ein Umlenkelement (11) zu einem freien Ende hin rundlich verdickt ist.

5. Vorrichtung nach einem der vorhergehenden Ansprüche, **dadurch gekennzeichnet, dass** die geometrische Struktur in mindestens einer Ebene (13, 14) als Mäander ausgebildet ist.

6. Vorrichtung nach Anspruch 5, **dadurch gekennzeichnet, dass** mindestens eine der Ebenen (13, 14) mehr als einen Mäander aufweist, und dass die Mäander in der Ebene (13, 14) voneinander getrennt sind.

7. Vorrichtung nach einem der Ansprüche 1 bis 4, **dadurch gekennzeichnet, dass** die geometrische Struktur aus einzelnen Barrieren gebildet ist, die versetzt zueinander in mindestens einer der Ebenen (13, 14) angeordnet sind.

8. Vorrichtung nach einem der Ansprüche 1 oder 2, **dadurch gekennzeichnet, dass** die geometrische Struktur in mindestens einer der Ebenen (13, 14) Dome (24) aufweist.

9. Vorrichtung nach einem der Ansprüche 1 oder 3, **dadurch gekennzeichnet, dass** die geometrische Struktur in mindestens einer Ebene (13, 14) als Spirale ausgebildet ist.

10. Vorrichtung nach einem der vorhergehenden Ansprüche, **dadurch gekennzeichnet, dass** der Vorkammer (6) eine zweite Auslassöffnung (8) zugeordnet ist, die in Strömungsrichtung direkt hinter der Einlassöffnung (7) der Vorkammer (6) zum Behälter und vor den Windungen der Vorkammer (6) angeordnet ist.

11. Vorrichtung nach einem der vorhergehenden Ansprüche, **dadurch gekennzeichnet, dass** die zweite Auslassöffnung (8) in einer Ableitungseinrichtung (9), insbesondere einem Ableitungsrohr, mündet, welche parallel zu einer Messstrecke (4) im Dämpfungsbecher (2) angeordnet ist.

12. Ölgeschmierter Motor, **dadurch gekennzeichnet, dass** der Motor eine Vorrichtung (1) nach einem der Ansprüche 1 bis 11 aufweist.

13. Kraftfahrzeug, **dadurch gekennzeichnet, dass** das Kraftfahrzeug eine Vorrichtung (1) nach einem der Ansprüche 1 bis 11 aufweist.

## Claims

1. A device for measuring a filling level in a container, having an ultrasound sensor, wherein the ultrasound sensor is assigned a damping cup with at least one pre-chamber, and the pre-chamber has an inlet opening to the container and an outlet opening to the damping cup,
**characterised in that**
the pre-chamber (6) has at least two levels (13, 14) which lie horizontally over each other, wherein each level (13, 14) has a geometric structure and
that the geometric structures of the levels (13, 14) are shaped in such a manner that the liquid flows through the levels (13, 14) in opposite directions to each other.

2. The device according to Claim 1, **characterised in that** the liquid flows through the levels (13, 14) from top to bottom.

3. The device according to one of Claims 1 or 2, **characterised in that** the geometric structure in at least one of the levels (13, 14) of the pre-chamber (6) is defined by deflection elements (11).

4. The device according to one of the preceding claims, **characterised in that** at least one deflection element (11) is thickened in a rounded manner towards a free end.

5. The device according to one of the preceding claims, **characterised in that** the geometric structure in at least one level (13, 14) is formed as a meander.

6. The device according to Claim 5, **characterised in that** at least one of the levels (13, 14) has more than one meander, and that the meanders in the level (13, 14) are separate from each other.

7. The device according to one of Claims 1 to 4, **characterised in that** the geometric structure is formed from individual barriers, which are arranged offset with respect to each other in at least one of the levels (13, 14).

8. The device according to one of Claims 1 or 2, **characterised in that** the geometric structure in at least one of the levels (13, 14) has domes (24).

9. The device according to one of Claims 1 or 3, **characterised in that** the geometric structure in at least one level (13, 14) is formed as a spiral.

10. The device according to one of the preceding claims, **characterised in that** the pre-chamber (6) is assigned a second outlet opening (8), which is arranged in the flow direction directly downstream of the inlet opening (7) of the pre-chamber (6) to the container and upstream of the coils of the pre-chamber (6).

11. The device according to one of the preceding claims, **characterised in that** the second outlet opening (8) opens into a discharge means (9), in particular a discharge tube, which is arranged parallel to a measurement section (4) in the damping cup (2).

12. An oil-lubricated engine, **characterised in that** the engine has a device (1) according to one of Claims 1 to 11.

13. A motor vehicle, **characterised in that** the motor vehicle has a device (1) according to one of Claims 1 to 11.

## Revendications

1. Dispositif de mesure d'un niveau de remplissage dans un récipient comportant un capteur d'ultrasons, dans lequel un boîtier d'amortissement comportant au moins une préchambre est affecté au capteur d'ultrasons et la préchambre présente une ouverture d'admission vers le récipient et une ouverture d'échappement vers le boîtier d'amortissement,
**caractérisé en ce que**
la préchambre (6) présente au moins deux plans (13, 14) situés l'un sur l'autre horizontalement, dans lequel chaque plan (13, 14) présente une structure géométrique, et
les structures géométriques des plans (13, 14) sont conçues de telle sorte que les plans (13, 14) soient traversées par l'écoulement du liquide en sens opposé.

2. Dispositif selon la revendication 1, **caractérisé en ce que** les plans (13, 14) sont traversés par l'écoulement du liquide du haut vers le bas.

3. Dispositif selon une des revendications 1 ou 2, **caractérisé en ce que** la structure géométrique est prescrite dans au moins un des plans (13, 14) de la préchambre (6) par des éléments de déviation (11).

4. Dispositif selon une des revendications précédentes, **caractérisé en ce que** au moins un élément de déviation (11) est épaissi en arrondi à une extrémité libre.

5. Dispositif selon une des revendications précédentes, **caractérisé en ce que** la structure géométrique est conçue comme un méandre dans au moins un des plans (13, 14).

6. Dispositif selon la revendication 5, **caractérisé en ce que** au moins un des plans (13, 14) présente plus d'un méandre, et **en ce que** les méandres dans le plan (13, 14) sont séparés les uns des autres.

7. Dispositif selon une des revendications 1 à 4, **caractérisé en ce que** la structure géométrique est formée de barrières individuelles, qui sont disposées en décalage les unes par rapport aux autres dans au moins un des plans (13, 14).

8. Dispositif selon une des revendications 1 ou 2, **caractérisé en ce que** la structure géométrique présente des dômes (24) dans au moins un des plans (13, 14).

9. Dispositif selon une des revendications 1 ou 3, **caractérisé en ce que** la structure géométrique est conçue comme une spirale dans au moins un plan (13, 14).

10. Dispositif selon une des revendications précédentes, **caractérisé en ce que** une deuxième ouverture d'échappement (8) est affectée à la préchambre (6), laquelle ouverture est disposée directement derrière l'ouverture d'admission (7) de la préchambre (6) vers le récipient et avant les spires de la pré-chambre (6).

11. Dispositif selon une des revendications précédentes, **caractérisé en ce que** la deuxième ouverture d'échappement (8) débouche dans un dispositif de déviation (9), notamment un tuyau de déviation, qui est disposé parallèlement à un conduit de mesure (4) dans le boîtier d'amortissement (2).

12. Moteur lubrifié à l'huile, **caractérisé en ce que** le moteur présente un dispositif (1) selon une des revendications 1 à 11.

13. Véhicule automobile, **caractérisé en ce que** le véhicule automobile présente un dispositif (1) selon une des revendications 1 à 11.
